# EUROPEAN PATENT APPLICATION

(11) **EP 1 796 322 A1**
(43) Date of publication of application: **13.06.2007**
(21) Application number: 05787744.1
(22) Date of filing: 27.09.2005
(51) Int. Cl.: H04L 12/56, G06Q 10/00, H04M 1/00, H04M 11/00

(54) **COMMUNICATION TERMINAL APPARATUS, ELECTRIC DEVICE AND COMMUNICATION METHOD**

(30) Priority: 01.10.2004 JP 2004290402
(71) Applicant: MATSUSHITA ELECTRIC INDUSTRIAL CO., LTD., Osaka 571-8501 (JP)
(72) Inventor: KITO, Tsutomu Panasonic Mobile Comm. Co.Ltd., Kanagawa, 224-8539 (JP); KANEKO, Tomoharu Panasonic Mobile Comm. Co.Ltd., Kanagawa, 224-8539 (JP); IWAMA, Tomohiro Panasonic Mobile Comm. Co.Ltd., Kanagawa, 224-8539 (JP); AOYAMA, Yasuhiro Panasonic Mobile Comm. Co.Ltd., Kanagawa, 224-8539 (JP)
(74) Representative: Grünecker, Kinkeldey, Stockmair & Schwanhäusser Anwaltssozietät
(86) International application number: PCT/JP2005/017686
(87) International publication number: WO 2006/038485

(57) **Abstract**

A communication terminal apparatus, an electric device and so on that apply an appropriate protocol. A message, which includes a protocol type designated by an electric device (102) with which a mobile telephone (101) is to directly connect and also includes the address and setting information of an NAT router (103) connected to the electric device (102), is transmitted from a server apparatus (104) disposed on the Internet to the mobile telephone (101). Then, the mobile telephone (101) applies, out of acquired protocol types, a protocol used to connect with the electric device (102), and uses the address and setting information of the NAT router (103) to connect with the electric device (102) via the NAT router (103).

## Description

### Technical Field

The present invention relates to a communication terminal apparatus, electrical appliance, and communication method.

### Background Art

In recent years, the popularity of the continuous connection environment of the Internet has continued to grow, enabling connection of various electrical appliances such as DVD records, network cameras, and white goods to networks. These business and home network environments (hereinafter "private networks") typically connect to the Internet by a router having a NAT (Network Address Translation)/NAPT (Network Address Port Translation) function.

With this type of private network, it is possible to start connection to a server that exists on the Internet from an electrical appliance, but conversely it is not possible to start connection to an electrical appliance from a server. This is because the address assigned to the electrical appliance can dynamically change, making it difficult for the communication partner to identify the address.

In addition, when the NAT router obtains a packet addressed to the electrical appliance from the Internet, control information (address/port conversion table) for properly transferring the obtained packet to the electrical appliance needs to be set in the NAT router.

Technology for such problems is disclosed in Patent Document 1. In Patent Document 1, as shown in FIG. 1, connection support server 10 having a global IP address is provided on the Internet, and a semi-fixed TCP/IP connection is established from electrical appliance 20 of a private network to connection support server 10 based on the global IP address, thereby enabling connection of electrical appliance 20 to connection support server 10.

On the other hand, in cases where connection to electrical appliance 20 is made from communication terminal 30, when communication terminal 30 connects to connection support server 10 based on a global IP address and sends to connection support server 10 a request for connection to electrical appliance 20, connection support server 10 relays the connection established with electrical appliance 20 and the connection established with communication terminal 30. Thus, communication between electrical appliance 20 and communication terminal 30 is realized. That is, communication terminal 30 that is outside the private network connects to connection support server 10 and a remote operation of electrical appliance 20 is performed or a service from electrical appliance 20 is utilized via a TCP/IP connection between connection support server 10 and electrical appliance 20.
Patent Document 1: Japanese Patent Application Laid-open No.2003-169075

### Disclosure of the Invention

### Problems to be Solved by the Invention

Nevertheless, a TCP/IP connection that connects the electrical appliance with a connection support server outside the private network is semi-fixed and may not be capable of applying the appropriate protocol.

It is therefore an object of the present invention to provide a communication terminal apparatus, electrical appliance, and communication method that apply an appropriate protocol.

### Means for Solving the Problem

The communication terminal apparatus of the present invention comprises first session management section that obtains by analysis of a message sent from a server apparatus provided on the Internet a protocol type specified by an electrical appliance subject to direct connection and the address and setting information of a NAT router connected with the electrical appliance that are included in the message, protocol management section that manages a plurality of protocols and applies the protocol among protocol types obtained by the first session management section that is to be used for connection with the electrical appliance, and connection section that makes a connection to the electrical appliance via the NAT router using the address and setting information of the NAT router.

The electrical appliance of the present invention employs a configuration having second session management section for including applicable protocol types in a message and sending the message to a communication terminal apparatus connected via a NAT router.

The communication method of the present invention comprises a session management step of obtaining by analysis of a message sent from a server apparatus provided on the Internet a protocol type specified by an electrical appliance subject to direct connection and the address and setting information of a NAT router connected with the electrical appliance that are included in the message, a protocol management step of managing a plurality of protocols and applying the protocol among protocol types obtained by the session management step that is to be used for connection with the electrical appliance, and a connection step of making a connection to the electrical appliance via the NAT router using the address and setting information of the NAT router.

### Advantageous Effect of the Invention

The present invention provides a communication terminal apparatus, electrical appliance, and communication method that apply an appropriate protocol.

### Brief Description of Drawings

FIG. 1 is a schematic diagram of the overall connection support system described in Patent Document 1;
FIG.2 is a concept diagram of the configuration of the communication system according to Embodiment 1 of the present invention;
FIG.3 is a block diagram showing the internal configuration of the mobile telephone shown in FIG.2;
FIG.4 is a block diagram showing the internal configuration of the electrical appliance shown in FIG.2;
FIG. 5 is a sequence diagram showing the procedure of the connection process between the electrical appliance and mobile telephone;
FIG.6 is a sequence diagram showing the processing procedure for changing to another protocol while a mobile telephone and electrical appliance are connected using a certain protocol.

### Best Mode for Carrying Out the Invention

Now embodiments of the present invention will be described in detail with reference to the accompanying drawings. The embodiments are described assuming that the mobile telephone is provided with an Internet connection function and is capable of message transmission/reception and web browsing. Furthermore, embodiments with configurations comprising the same functions are given the same call-outs and duplicate descriptions thereof are omitted.

### (Embodiment 1)

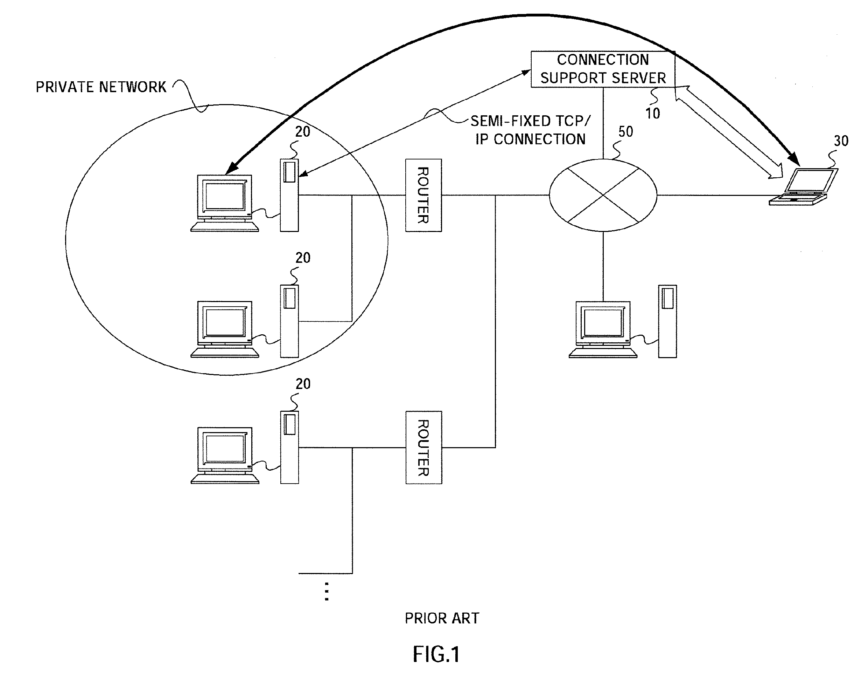

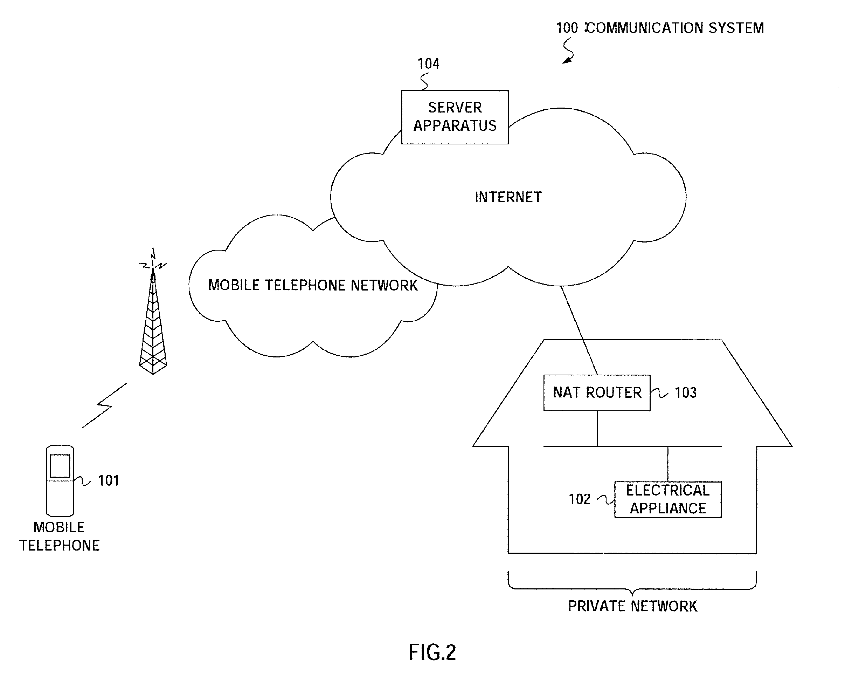

In communication system 100 according to Embodiment 1 of the present invention, as shown in FIG.2, primarily the Internet and a mobile telephone network are connected, and the Internet and a private network are connected. The private network comprises components such as electrical appliance 102 and NAT router 103.

Mobile telephone 101 has a wireless connection with the mobile telephone network and performs direct connection (peer-to-peer or P2P) communication with electrical appliance 102.

Electrical appliance 102 is typically referred to as an Internet appliance, and is a home electrical product comprising an Internet connection function, such as a DVD recorder, network camera, or white good. Electrical appliance 102 is connected with NAT router 103 and may also be connected with another electrical appliance (not shown).

NAT router 103 is connected to electrical appliance 102 and relays the connection between electrical appliance 102 and the Internet by assigning a private address to the connected electrical appliance 102 and interconverting the global IP address assigned to the private network and the private address.

Server apparatus 104 is provided on the Internet and establishes connections with a plurality of electrical appliances 102. In addition, server apparatus 104 establishes a connection with mobile telephone 101. Then, server apparatus 104 notifies mobile telephone 101 with which connection has been established of the protocol type held in advance that has been specified by electrical appliance 102.

Furthermore, assuming the network with which mobile telephone 101 is connected is a mobile telephone network (cellular network), mobile telephone 101 may utilize a variety of Internet services by a cellular operator, such as i-mode (registered trademark) or EZWeb (registered trademark).

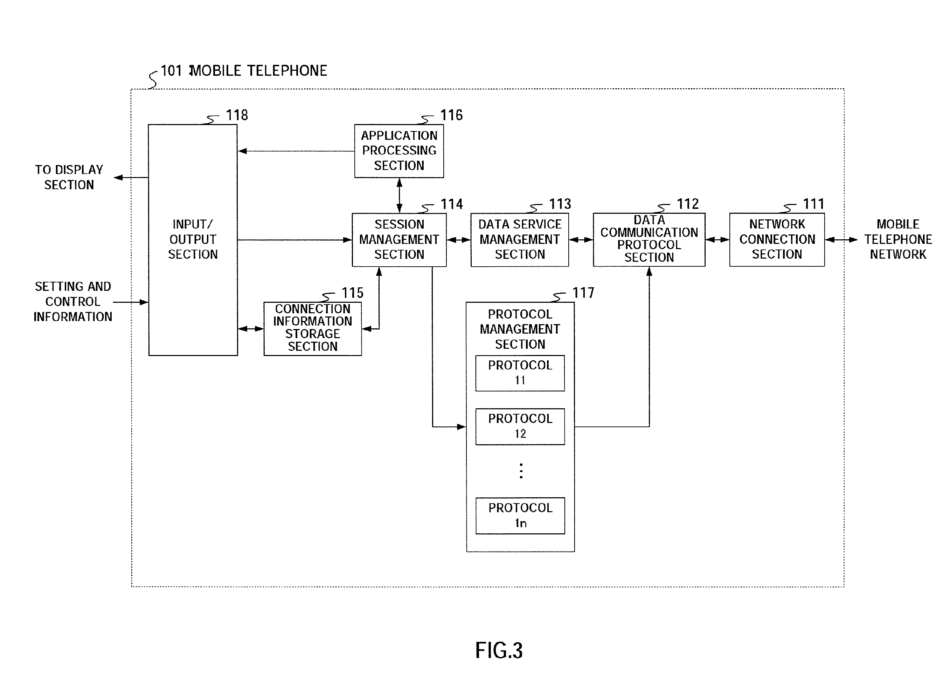

Next, the internal configuration of mobile telephone 101 will be described with reference to FIG.3. In this figure, network connection section 111 connects to a mobile telephone network and performs protocol processing in accordance with the mobile telephone network. Data communication protocol section 112 performs packet processing, and data service processing section 113 realizes the service requested by the mobile telephone user.

Session management section 114 manages the connection with the electrical appliance requested by the user and stores the connection information including the number of the session established with electrical appliance 102, message sequence number, mobile telephone ID, and electrical appliance ID in connection information storage section 115. In addition, session management section 114 analyzes the message sent from server apparatus 104, and provides instructions to protocol management section 117 regarding the protocol type included in the message that is to be applied to the connection with electrical appliance 102. Furthermore, once connection with electrical appliance 102 is established, session management section 114 adds the connection information to the message and sends the message to the connected electrical appliance 102.

Connection information storage section 115 stores, for example, information indicating electrical appliance 102 of the connection destination, connection information of NAT router 103, applicable protocols, currently used protocol, and current connection information. Here, the connection information of NAT router 103 refers to the global IP address of NAT router 103 and the port number for connection to the requested electrical appliance 102.

Once mobile telephone 101 is connected to electrical appliance 102, application processing section 116 operates electrical appliance 102 of the connection destination using mobile telephone 101 and executes an application that provides the service requested by the user.

Protocol management section 117 comprises a plurality of protocols 11 to 1n, receives instructions from session management section 114, and applies the applicable protocol to data communication protocol section 112.

Input/Output section 118 displays the information stored in connection information storage section 115 and stores the setting information input by the user, etc., in connection information storage section 115. In addition, according to the control information input by the user, etc., input/output section 118 instructs session management section 114 to switch the protocol used for connection with electrical appliance 101.

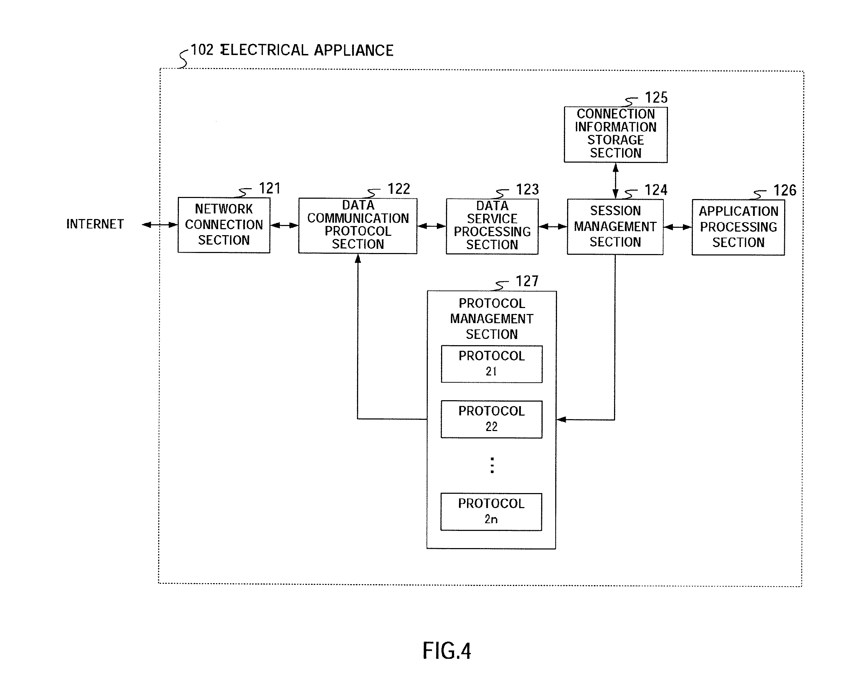

Next, the internal configuration of electrical appliance 102 will be described with reference to FIG.4. In FIG.4, network connection section 121 connects to the Internet and performs protocol processing in accordance with the Internet. Data communication protocol section 122 performs packet processing, and data service processing section 123 processes messages transmitted and received with a communication partner.

Session management section 124 manages the connection with mobile telephone 101 and stores the connection information sent from mobile telephone 101 to connection information storage section 125. In addition, session management section 124 provides instructions to protocol management section 127 regarding the protocol to be applied to the connection with mobile telephone 101. Furthermore, once connection with mobile telephone 101 is established, session management section 124 adds the connection information to the message and sends the message to the connected mobile telephone 101.

Connection information storage section 125 stores, for example, information indicating mobile telephone 101 of the connection destination, connection information of NAT router 103, applicable protocols, currently used protocol, and current connection information.

Once mobile telephone 101 is connected to electrical appliance 102, application processing section 126 operates electrical appliance 102 of the connection destination using mobile telephone 101 and executes an application that provides the service requested by the user.

Protocol management section 127 comprises a plurality of protocols 21 to 2n, receives instructions from session management section 124, and applies the applicable protocol to data communication protocol section 122.

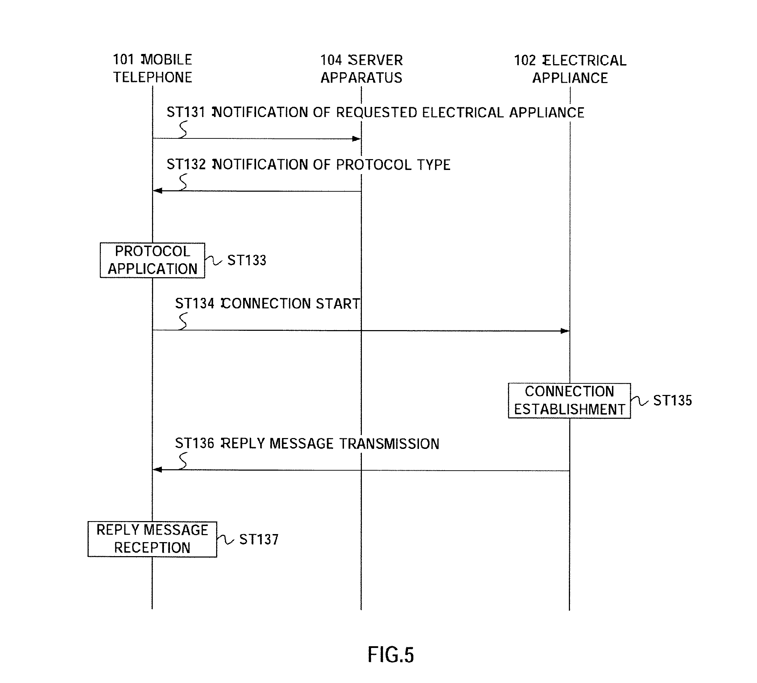

Next, the procedure of the connection step of electrical appliance 102 and mobile telephone 101 having the above-mentioned configuration will be described with reference to FIG.5. In FIG.5, mobile telephone 101 connects to server apparatus 104 via the mobile telephone network and the Internet and notifies server apparatus 104 of electrical appliance 102 requested by the mobile telephone user in ST131, and server apparatus 104 notifies mobile telephone 101 of the protocol type specified by electrical appliance 101 requested by the user in ST132. Here, if the protocol type specified by electrical appliance 102 is a secure protocol, mobile telephone 101 that requested connection may be authenticated for secure communication.

Mobile telephone 101 applies the protocol type such as SSL 2.0/3.0 notified by server apparatus 104 that is to be used for connection with electrical appliance 102 in ST133, and starts connection with electrical appliance 102 in accordance with the applied protocol and connection information used for connection with electrical appliance 102 in ST134.

Electrical appliance 102 establishes a connection with mobile telephone 101 in ST135, and adds connection information to the reply message and sends the message to mobile telephone 101 in ST136.

Mobile telephone 101 receives the reply message from electrical appliance 102 and shares the connection information included in the message with electrical appliance 102 in ST137.

Thus, according to Embodiment 1, a mobile telephone that requests connection with an electrical appliance is notified of the protocol type specified by the electrical appliance among those held in advance by a server, thereby enabling selection of the protocol required for connection with the electrical appliance from the protocol types notified by the mobile telephone and thus application of the appropriate protocol.

Furthermore, while the present embodiment uses a mobile telephone network (cellular network) as an example of the network with which mobile telephone 101 is connected, the present invention is not limited thereto, and a wireless LAN network may also be used. In this case, the mobile telephone will operate as a standard IP terminal and the protocol used will be IPsec, for example.

In addition, while the present embodiment describes a case where mobile telephone 101 selects from the protocol types notified by server apparatus 104 the protocol to be used for connection with an electrical appliance, mobile telephone 101 may start connection with an electrical appliance with which it had been connected in the past using information stored in connection information storage section 115. This simplifies the connection process between mobile telephone 101 and electrical appliance 102.

In addition, because mobile telephone 101 permits storage of new information in connection information storage section 115 and updating of the information stored in connection information storage section 115 by the user, etc., via input/output section 118, mobile telephone 101 may start connection with electrical appliance 102 using the information stored in connection information storage section 115. This enables the user to perform setting and maintenance work.

### (Embodiment 2)

While Embodiment 1 describes the case where a mobile telephone selects the protocol to be used for connection at the time of mobile telephone and electrical appliance connection, Embodiment 2 of the present invention describes the case where protocol 1 is changed to protocol 2 during mobile telephone and electrical appliance connection using protocol 1. Specifically, the present embodiment describes the case where the protocol currently used in a mobile telephone and electrical appliance connection in progress is changed upon receipt of content to a protocol required for content provision, assuming the electrical appliance is, for example, a DVD recorder that provides content. Furthermore, the configurations of the electrical appliance and mobile telephone of the present embodiment are the same as those of FIG.3 and FIG.4, respectively, and thus the embodiment will be described with reference to FIG.3 and FIG.4.

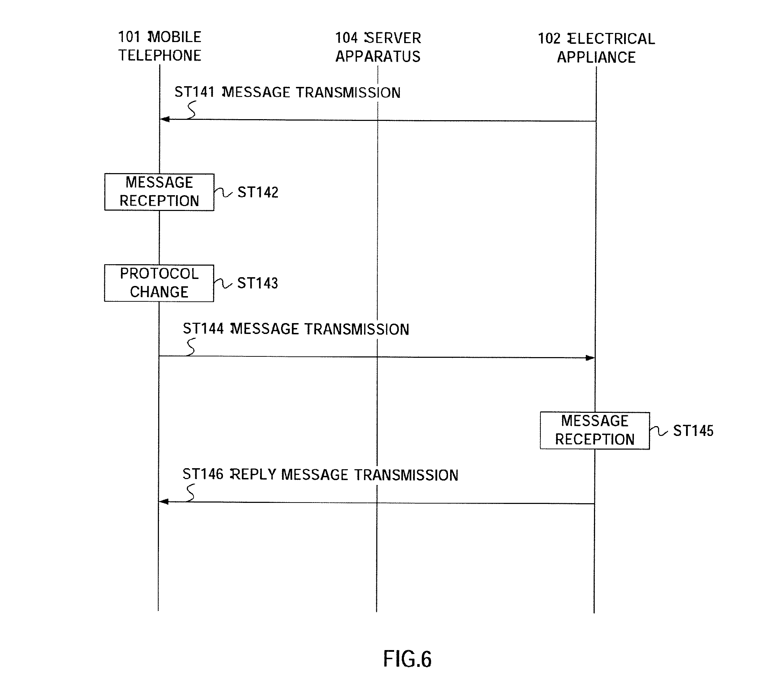

FIG. 6 is a sequence diagram showing the processing procedure for changing to another protocol while a mobile telephone and electrical appliance connection is in progress using a certain protocol. In this figure, electrical appliance 102 stores the protocol type required for content provision in a message and sends the message to mobile telephone 101 in ST141.

Mobile telephone 101 receives the message sent from electrical appliance 102 and receives notification of the protocol type included in the received message in ST142. Mobile telephone 101 changes to the protocol notified by electrical appliance 102 in ST143, and adds connection information inherited from the previous connection to the message and sends the message to electrical appliance 102 in ST144. At this time, session management section 114 of mobile telephone 101 updates the information stored in connection information storage section 115. Furthermore, the configuration may be designed so that the mobile telephone user confirms the protocol change and changes the protocol.

Electrical appliance 102 receives the message sent from mobile telephone 101, confirms the connection information included in the received message, and acknowledges connection continuation in ST145. In addition, session management section 124 of electrical appliance 102 updates the information stored in connection information storage section 125.

Electrical appliance 102 adds information indicating that the connection with mobile telephone 101 has been continued to the reply message, and sends the message to mobile telephone 101 in ST146.

Thus, according to Embodiment 2, when a protocol is to be changed to another protocol with a mobile telephone and electrical appliance are connected, the electrical appliance confirms continuation of the connection between the mobile telephone and electrical appliance before and after the protocol change, thereby enabling omission of reconnection processing such as authentication and achieving an efficient protocol change.

### (Embodiment 3)

Embodiment 3 of the present invention describes the case where, during mobile telephone and electrical appliance connection using a certain protocol, the protocol is changed to another protocol based on the initiative of the mobile telephone user. Furthermore, the configurations of the electrical appliance and mobile telephone of the present embodiment are the same as those of FIG.3 and FIG.4, respectively, and thus the embodiment will be described with reference to FIG.3 and FIG.4.

When the currently applicable protocols stored in connection information storage section 115 of mobile telephone 101 are displayed via input/output section 118, the mobile telephone user instructs session management section 114 to change the protocol via input/output section 118.

Session management section 114 changes the protocol used for the current connection to the protocol instructed by the user, adds the connection information inherited from the previous connection to the message, and sends the message to electrical appliance 102. At this time, session management section 114 updates the information stored in connection information storage section 115.

Electrical appliance 102 receives the message sent from mobile telephone 101, confirms the connection information included in the received message, and acknowledges connection continuation. In addition, session management section 124 of electrical appliance 102 updates the information stored in connection information storage section 125.

Thus, for example, in a case where mobile telephone 101 is connectable to a wireless LAN network while connected to a mobile telephone network, the mobile telephone user can switch to the electrical appliance 102 connection via the wireless LAN network while maintaining the electrical appliance 102 connection via the mobile telephone network.

### (Embodiment 4)

Embodiment 4 of the present invention describes the case where a mobile telephone automatically changes the connected network. Furthermore, the configurations of the electrical appliance and mobile telephone of the present embodiment are the same as those of FIG.3 and FIG.4, respectively, and thus the embodiment will be described with reference to FIG.3 and FIG.4.

When second network becomes connectable due to the movement of mobile telephone 101 during connection with electrical appliance 102 via first network, network connection section 111 of mobile telephone 101 detects and notifies session management section 114 of the second connectable network.

Session management section 114 provides instructions to protocol management section 117 regarding the protocol to be used for connection with the second network, and changes the protocol.

Thus, in a case where the second network becomes connectable while mobile telephone 101 is connected to electrical appliance 102 via the first network, the connection can be switched to the electrical appliance 102 connection via the second network.

A first aspect of the present invention is a communication terminal apparatus comprising first session management section that obtains by analysis of a message sent from a server apparatus provided on the Internet a protocol type specified by an electrical appliance subject to direct connection and the address and setting information of the NAT router connected with the electrical appliance that are included in the message, protocol management section that manages a plurality of protocols and applies the protocol among protocol types obtained by the first session management section that is to be used for connection with the electrical appliance, and connection section that makes a connection to the electrical appliance via the NAT router using the address and setting information of the NAT router.

According to this configuration, by notifying the protocol type specified by the electrical appliance, the protocol to be used for connection with the electrical appliance can be selected from those protocols notified by a mobile telephone and applied.

A second aspect of the present invention is a communication terminal apparatus wherein, in the above mentioned aspects, the first session management section obtains by analysis of a message sent from an electrical appliance connected via the NAT router a protocol type that is different from the protocol currently used for connection with the electrical appliance and is included in the message, and instructs the protocol management section to change to the obtained protocol.

According to this configuration, a protocol type different from the protocol currently used for connection with an electrical appliance is obtained from the electrical appliance and the protocol is changed thereto, thereby enabling a protocol change while connection with the electrical appliance continues as is.

A third aspect of the present invention is a communication terminal apparatus wherein, in the above mentioned aspect, the first session management section includes in a message connection information indicating connection with the electrical appliance, and sends the message to the electrical appliance connected via the NAT router.

According to this configuration, a message that includes connection information indicating connection with the electrical appliance is sent to the electrical appliance, thereby enabling confirmation of continued connection with the communication terminal apparatus in the electrical appliance.

A fourth aspect of the present invention is a communication terminal apparatus wherein, in the above mentioned aspect, the communication terminal apparatus notifies the user of applicable protocol types during connection with the electrical appliance via the NAT router.

According to this configuration, the user is notified of applicable protocol types, thereby enabling user selection of the protocol to be applied.

A fifth aspect of the present invention is a communication terminal 1 apparatus that, in the above mentioned aspect, further comprises storage section that stores connection information obtained by past connection with the electrical appliance, wherein the first session management section includes in a message connection information stored in the storage section and sends the message to the disconnected electrical appliance.

According to this configuration, connection information stored in storage section is sent to a disconnected electrical appliance, thereby simplifying the reconnection process with the electrical appliance.

A sixth aspect of the present invention is a communication terminal apparatus wherein, in the above mentioned aspect, the storage section stores connection information input by the user.

According to this configuration, connection information input by the user is stored, thereby enabling the user to perform setting and maintenance work.

A seventh aspect of the present invention is a communication terminal apparatus wherein, in the above mentioned aspect, the first session management means receives from the user instructions to change to a protocol that is different from the protocol currently used for connection with the electrical appliance during connection with the electrical appliance via the NAT router, and instructs the protocol management section to change the protocol that is different from the protocol currently used.

According to this configuration, instructions to change to a protocol different from the protocol currently used for connection with the electrical appliance are received from the user and the protocol is changed to that protocol instructed by the user, thereby enabling the user to freely change the protocol.

A eighth aspect of the present invention is a communication terminal apparatus wherein, in the above mentioned aspect, the first session management section instructs the protocol management section to change to the protocol to be used for connection with the electrical appliance via the second network when the second network becomes connectable during connection to the electrical appliance via the first network.

According to this configuration, during connection to the electrical appliance via the first network, the protocol is changed to the protocol to be used for connection with the electrical appliance via second network when the second network becomes connectable, thereby enabling automatic changing of the connected network.

A ninth aspect of the present invention is an electrical appliance comprising the second session management section for including applicable protocol types in a message and sending the message to a communication terminal apparatus connected via a NAT router.

According to this configuration, a message including applicable protocol types is sent to the communication terminal apparatus, thereby enabling appropriate application of the protocol to be used for connection with an electrical appliance requested by the communication terminal apparatus, even when the applicable protocol type differs according to electrical appliance.

A tenth aspect of the present invention is an electrical appliance wherein, in the above mentioned aspect, the second a session management section includes in a message connection in formation indicating connection with a communication terminal apparatus, and sends the message to the communication terminal apparatus connected via a NAT router.

According to this configuration, a message that includes connection information indicating connection with a communication terminal apparatus is sent to the communication terminal apparatus, thereby enabling confirmation of continued connection with the electrical appliance in the communication terminal apparatus.

A eleventh aspect of the present invention is an electrical appliance that delivers content, the electrical appliance comprising third session management section includes in a message applicable protocol types corresponding to the content and sending the message to a communication terminal apparatus connected via a NAT router.

According to this configuration, a message including applicable protocol types in accordance with content is sent to a communication terminal apparatus, thereby enabling in cases where delivery of content is requested while the communication terminal apparatus is connected with an electrical appliance use of the protocol corresponding to the content for which delivery was requested and thus efficient receipt of delivery of the content by the communication terminal apparatus.

A twelfth aspect of the present invention is a communication method comprising a session management step of obtaining by analysis of a message sent from a server apparatus provided on the Internet a protocol type specified by an electrical appliance subject to direct connection and the address and setting information of a NAT router connected with the electrical appliance that are included in the message, a protocol management step of managing a plurality of protocols and applying the protocol among protocol types obtained by the session management step that is to be used for connection with the electrical appliance, and a connection step of making a connection to the electrical appliance via the NAT router using the address and setting information of the NAT router.

According to this configuration, by notifying the protocol type specified by the electrical appliance, the protocol to be used for connection with the electrical appliance can be selected from those protocols notified by a mobile telephone and applied.

The present application is based on Japanese Patent Application No.2004-290402, filed on October 1, 2004, the entire content of which is expressly incorporated by reference herein.

### Industrial Applicability

The communication terminal apparatus, electrical appliance, and communication method of the present invention has the effect of applying an appropriate protocol and is applicable to Internet appliances, mobile telephones, and other devices.

## Claims

1. A communication terminal apparatus comprising:
a first session management section that obtains by analysis of a message sent from a server apparatus provided on the Internet a protocol type specified by an electrical appliance subject to direct connection and the address and setting information of a NAT router connected with the electrical appliance that are included in the message;
a protocol management section that manages a plurality of protocols and applies the protocol among protocol types obtained by the first session management section that is to be used for connection with the electrical appliance; and
a connection section that makes a connection to the electrical appliance via the NAT router using the address and setting information of the NAT router.

2. The communication terminal apparatus according to claim 1, wherein the first session management section obtains by analysis of a message sent from an electrical appliance connected via the NAT router a protocol type that is different from the protocol currently used for connection with the electrical appliance and is included in the message, and instructs the protocol management section to change to the obtained protocol.

3. The communication terminal apparatus according to claim 1, wherein the first session management section includes in a message connection information indicating connection with the electrical appliance, and sends the message to the electrical appliance connected via the NAT router.

4. The communication terminal apparatus according to claim 1, wherein the communication terminal apparatus notifies the user of applicable protocol types during connection with the electrical appliance via the NAT router.

5. The communication terminal apparatus according to claim 1, further comprising a storage section that stores connection information obtained by past connection with the electrical appliance, wherein the first session management section includes in a message the connection information stored in the storage section and sends the message to the disconnected electrical appliance.

6. The communication terminal apparatus according to claim 5, wherein the storage section stores connection information input by the user.

7. The communication terminal apparatus according to claim 1, wherein the first session management section receives from the user instructions to change to a protocol that is different from the protocol currently used for connection with the electrical appliance during connection with the electrical appliance via the NAT router, and instructs the protocol management section to change to the protocol that is different from the protocol currently used.

8. The communication terminal apparatus according to claim 1, wherein the first session management section instructs the protocol management section to change to the protocol to be used for connection with the electrical appliance via second network when the second network becomes connectable during connection to the electrical appliance via the first network.

9. An electrical appliance comprising a second session management section for including applicable protocol types in a message and sending the message to a communication terminal apparatus connected via a NAT router.

10. The electrical appliance according to claim 9, wherein the second session management section includes in a message connection information indicating connection with a communication terminal apparatus, and sends the message to the communication terminal apparatus connected via a NAT router.

11. The electrical appliance according to claim 9, wherein the second session management section includes in a message protocol types that differ from first protocol and sends the message to the communication terminal apparatus connected via a NAT router using the first protocol.

12. A communication method comprising:
a session management step of obtaining by analysis of a message sent from a server apparatus provided on the Internet a protocol type specified by an electrical appliance subject to direct connection and the address and setting information of a NAT router connected with the electrical appliance that are included in the message;
a protocol management step of managing a plurality of protocols and applying the protocol among protocol types obtained by the session management step that is to be used for connection with the electrical appliance; and
a connection step of making a connection to the electrical appliance via the NAT router using the address and setting information of the NAT router.
